# EUROPÄISCHE PATENTSCHRIFT

(11) **EP 3 311 981 B1**
(45) Veröffentlichungstag und Bekanntmachung des Hinweises auf die Patenterteilung: **29.07.2020**
(21) Anmeldenummer: 16194320.4
(22) Anmeldetag: 18.10.2016
(51) Int. Cl.: B29C 51/46, B29C 51/44, B25J 15/06, B65G 47/91

(54) **VORRICHTUNG ZUM THERMOFORMEN MIT EINEM PRODUKTSENSOR**
DEVICE FOR THERMOFORMING WITH A PRODUCT SENSOR
DISPOSITIF DE THERMOFORMAGE DOTÉ D'UN CAPTEUR DE PRODUIT

(43) Veröffentlichungstag der Anmeldung: 25.04.2018
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- EP-A1- 1 800 836
- US-A- 5 470 117
- Rennco: "Cup Counter / Loader CCL", , 1 August 2013 (2013-08-01), XP055667909, Retrieved from the Internet: URL:https://www.rennco.com/products/cup-co unter-cup-loader/ [retrieved on 2020-02-12]

## Beschreibung

Die Erfindung betrifft eine Vorrichtung zum Thermoformen nach dem Oberbegriff des Anspruchs 1. Die Erfindung betrifft zudem ein Verfahren zum Betrieb einer erfindungsgemäßen Vorrichtung mit den Merkmalen des Anspruchs 12.

EP 2 644 358 B1 beschreibt eine Thermoformmaschine, bei der eine Vielzahl von konischen Haltegliedern mittels Saugleitungen an einem plattenförmigen Grundkörper aufgenommen sind. Der Grundkörper hat einen evakuierbaren Hohlraum, an den die Saugleitungen angeschlossen sind.

EP 1 800 836 A1 beschreibt eine ähnliche Anordnung, die dem Oberbegriff des Anspruchs 1 entspricht, bei der über eine zentrale Druckmessung festgestellt werden soll, ob an den Haltegliedern Produkte fehlen. Insbesondere bei einer großen Anzahl von Haltegliedern kann das Fehlen nur eines Produkts hierbei nur schwer detektiert werden.

US5470117A offenbart ein Halteglied für eine Papierrolle mit Saugteilkammern, wobei jede Saugteilkammer mittels eines Sensors überwacht wird.

XP055667909 offenbart eine Vorrichtung mit optischen Sensoren zum Zählen von thermogeformten Bechern.(https://www.rennco.com/products/cup-counter-cup-loader/) Z

Allgemein betrifft die Erfindung Vorrichtungen bzw. Maschinen zum Thermoformen von Kunststoff. Dabei werden Folien oder Platten aus thermoplastischem Material bei entsprechender Temperatur durch Mehrfachwerkzeuge zum einen umgeformt und zum anderen ausgestanzt, wobei die Vorgänge bevorzugt in demselben Arbeitsschritt erfolgen. Bei solchen Anlagen ist ein hoher Produktdurchsatz vorgesehen, so dass die Übergabe der geformten Produkte schnell und zuverlässig erfolgen muss. Typische Produkte solcher Vorrichtungen sind alle Arten von Kunststoff-Verpackungsmaterial wie etwa Becher, Deckel, Schalen, Blisterverpackungen und Ähnliches.

Es ist die Aufgabe der Erfindung, eine Vorrichtung zum Stapeln von aus einem Mehrfachwerkzeug einer Thermoformmaschine ausgegebenen Produkten anzugeben, die eine möglichst hohe Prozesssicherheit ermöglicht.

Diese Aufgabe wird für eine eingangs genannte Vorrichtung erfindungsgemäß mit den kennzeichnenden Merkmalen des Anspruchs 1 gelöst. Durch die an den Haltegliedern angeordneten Sensorglieder ist eine besonders sichere und vollständige Überwachung ermöglicht. Insbesondere kann zuverlässig und schnell detektiert werden, ob bei der Übernahme der Produkte von dem Mehrfachwerkzeug ein Halteglied nicht belegt bzw. ein Produkt im Mehrfachwerkzeug verblieben ist. Bevorzugt sind sämtliche der Halteglieder mit einem jeweiligen Sensorglied ausgestattet.

Unter einer Sammelstation im Sinne der Erfindung wird jede Einrichtung verstanden, die die Produkte von den Haltegliedern übernimmt. Insbesondere bevorzugt kann es sich um eine Stapelanlage, zum Beispiel zum Stapeln von becherförmigen Produkten oder Ähnlichem, handeln. Je nach Detailgestaltung kann die Stapelanlage auch Funktionen zur Registrierung der Produkte aufweisen und so eine vollständige Übergabe zusätzlich sicherstellen. Es kann sich je nach Anforderungen bei der Sammelstation auch um einen Behälter, ein Förderband oder eine sonstige Anlage zum Weiterbewegen der Produkte handeln.

Das Mehrfachwerkzeug kann bevorzugt mit einer aktiven Auswerferfunktion zum Auswurf der Produkte ausgestattet sein. Insbesondere kann das Mehrfachwerkzeug an einem Schwenktisch aufgenommen sein und zum Verfahren in eine Übergabeposition um eine Schwenktischachse verschwenkt werden.

Die Sensorglieder sind bevorzugt jeweils als optische Sensoren ausgebildet, wobei die Detektion des Produktes berührungsfrei erfolgt. Dies ermöglicht hohe Lebensdauern, geringe Störanfälligkeit und den Verzicht auf mechanische Einwirkung auf die Produkte seitens der Sensorglieder. Alternativ oder ergänzend können aber auch elektrische, z.B. induktive oder kapazitive, Sensorglieder oder mechanische Tastschalter als Sensorglieder vorgesehen sein.

Bei einer bevorzugten Ausführungsform kann es vorgesehen sein, dass eine Schaltfunktion der Sensorglieder über ein Steuersignal ansteuerbar umschaltbar ist. Dies erlaubt insbesondere die Kontrolle sowohl einer vollständigen Übernahme der Produkte von dem Mehrfachwerkzeug als auch einer vollständigen Übergabe an die Sammelstation. Bei einer einfachen Realisierung ist dabei in einer ersten Schaltfunktion das Sensorglied bei Anwesenheit eines Produktes entweder elektrisch geöffnet oder geschlossen und nimmt in der anderen Schaltfunktion den jeweils umgekehrten Zustand an.

Im Sinne einer einfachen baulichen Realisierung sind die Sensorglieder vorteilhaft jeweils vakuumseitig, besonders bevorzugt innerhalb der Saugleitung, angeordnet. Dabei verbleibt ein ausreichender freier Querschnitt zum Luftdurchtritt, um eine Saugfunktion der Halteglieder zu gewährleisten. Besonders bevorzugt ist dabei eine Zuleitung eines der Sensorglieder jeweils in der Saugleitung verlegt. Insgesamt wird so eine einfache, massenzentrierte und geschützte Bauweise einer sensorbewehrten Anordnung von Haltegliedern ermöglicht.

Bei möglichen alternativen Ausführungsformen der Erfindung können die Sensorglieder auch in einem Vakuumkanal des Grundkörpers angeordnet sein und die Produkte optisch über die Länge der Saugleitungen hinweg erfassen. Weiterhin ist es denkbar, dass in den Saugleitungen Lichtleiter zur Detektion der Produkte verlegt sind.

Bei einer besonders bevorzugten Ausführungsform der Erfindung sind die Sensorglieder mittels Zuleitungen zu einer eine Serien- oder Parallelschaltung verbunden. Dies erlaubt die Zusammenfassung der Einzelsignale der Sensorglieder zu einem logisch verknüpften Gesamtsignal, so dass mit einem minimalen Aufwand an Verkabelung gearbeitet werden kann. Dies senkt wiederum Kosten, bewegte Massen und Fehleranfälligkeit. Dabei wird im Allgemeinen auf die Lokalisierung bzw. Identifizierung der einzelnen Signale verzichtet. Ein fehlerhafter Vorgang liegt bereits vor, wenn nur eines der logisch verknüpften Halteglieder kein Produkt von dem Mehrfachwerkzeug aufgenommen hat, oder wenn nach Übergabe an die Sammelstation nur eines der Produkte auf einem Halteglied verblieben ist. Dies führt dann zum Beispiel zur Sofortabschaltung der Anlage, um Folgefehler und größere Schäden zu vermeiden.

Bei hierzu alternativen Ausführungsformen kann aber auch eine individuelle Ansteuerung bzw. Auslesung der Sensorglieder vorgesehen sein. Neben einer aufwendigen individuellen Verkabelung der einzelnen Sensorglieder ist es auch denkbar, die Sensorgliedern jeweils mit einer integrierten Steuerelektronik zu versehen, so dass sie an ein Datenbussystem mit entsprechend wenigen äußeren Zuleitungen anschließbar sind. Auch eine Funkübertragung von Signalen der Sensorglieder ist je nach Anforderungen möglich.

Allgemein vorteilhaft ist an dem Grundkörper eine Steckverbindung angeordnet, mittels der zumindest mehrere der Sensorglieder mit einer Steuereinheit lösbar verbindbar sind. Dies erlaubt einen einfachen und schnellen Wechsel des Grundkörpers mit den Haltegliedern zum Beispiel bei einer Produktänderung.

Die spezifischen Merkmale der Erfindung finden optimale Anwendung bei Anlagen, bei denen der Grundkörper auf einem Weg zwischen der Thermoformmaschine und der Sammelstation um eine Schwenkachse verschwenkt wird. Solche Übergabevorrichtungen weisen hohe Beschleunigungen auf, so dass die bewegten Massen klein zu halten sind.

Die Aufgabe der Erfindung wird zudem gelöst durch ein Verfahren zum Betrieb einer erfindungsgemäßen Vorrichtung, umfassend zumindest einen der Schritte:
a. Aufnahme der Produkte von dem Mehrfachwerkzeug und Detektion mittels der Sensorglieder, ob sämtliche der Halteglieder mit einem Produkt belegt sind;
b. Abgabe der Produkte an die Sammelstation und Detektion mittels der Sensorglieder, ob sämtliche der Halteglieder nicht mit einem Produkt belegt sind.

Bevorzugt ist es dabei zudem vorgesehen, dass sowohl Schritt a. als auch Schritt b. durchgeführt werden, wobei besonders bevorzugt die Sensorglieder zwischen den Schritten ein Steuersignal zum Umschalten einer Sensorfunktion erhalten. Hierdurch lässt sich sowohl die Übernahme in Schritt a. als auch die Übergabe in Schritt b. mittels einer einfachen Verkabelung überwachen.

Weitere Vorteile und Merkmale ergeben sich aus dem nachfolgend beschriebenen Ausführungsbeispielen sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine schematische Darstellung einer erfindungsgemäßen Vorrichtung in einem Gesamtsystem;
- Fig. 2: zeigt eine Schnittansicht einer Detailvergrößerung des Bereichs A der Vorrichtung aus Fig. 1;
- Fig. 3: zeigt einen schematischen Schaltplan von Sensorgliedern der Vorrichtung aus Fig. 1 in einem ersten Zustand der Sensorglieder; und
- Fig. 4: zeigt den Schaltplan aus Fig. 3 in einem zweiten Zustand der Sensorglieder.

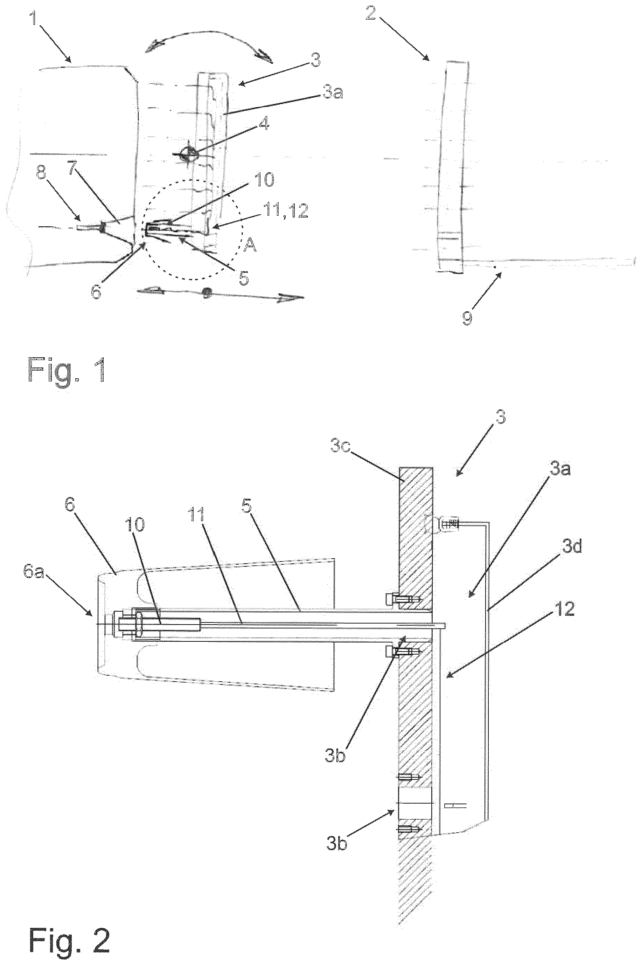

Fig. 1 zeigt ein aufgeschwenktes Mehrfachwerkzeug 1 einer Thermoformmaschine sowie eine hiervon beabstandet plazierte Sammelstation 2 für die Aufnahme von Produkten aus dem Mehrfachwerkzeug 1. Die Sammelstation 2 ist vorliegend nach Art einer Stapelstation zum Stapeln von becherförmigen Produkten ausgebildet.

Eine erfindungsgemäße Vorrichtung ist zwischen dem Mehrfachwerkzeug 1 und der Sammelstation 2 angeordnet. Sie umfasst einen plattenförmigen Grundkörper 3, der mittels nicht dargestellter Antriebe um etwa 180° um eine Schwenkachse 4 verschwenkbar und zudem gemeinsam mit der Achse lateral verfahrbar ist.

Der plattenförmige Grundkörper 3 ist auf einer Seite mit einer Vielzahl von starren Saugleitungen 5 bestückt, an denen jeweils ein konisch geformtes Halteglied 6 angeordnet ist. Aus Gründen der Übersichtlichkeit ist in den Figuren nur jeweils ein Halteglied 6 auf dem Grundkörper 3 dargestellt. Das Halteglied 6 hat eine einem Bodenbereich des gehaltenen Produktes gegenüberliegende Durchbrechung 6a, die in Fortsetzung der Saugleitung 5 angeordnet ist. Die Saugleitungen 5 stehen Grundkörperseitig jeweils mit einem evakuierbaren Hohlraum bzw. Vakuumkanal 3a des Grundkörpers 3 in Verbindung. Der Grundkörper hat eine mehrfach mit Durchbrechungen 3b versehene Tragplatte 3c, wobei ein Korb 3d zur Ausbildung des Vakuumkanals 3a dichtend über der Tragplatte 3c angeordnet ist. Die Saugleitungen 5 sind jeweils über den Durchbrechungen 3b festgelegt.

Durch eine entsprechende Evakuierung des Hohlraums 3a und der Saugleitungen 5 werden die Produkte vom äußeren Luftdruck an die Halteglieder 6 gedrückt.

Die Anzahl und Anordnung der Halteglieder 6 entspricht einer Anordnung von Formen bzw. Nutzen 7 an dem Mehrfachwerkzeug 1 (in Fig. 1 ist nur eine Form 7 gezeigt). Dabei wird jeweils ein im Allgemeinen formgleiches Produkt in jeder der Formen 7 ausgeformt und in einer entsprechenden Übergabestellung auf eines der Halteglieder 6 übergeben. Hierzu weist das Mehrfachwerkzeug vorliegend Auswerfer 8 auf.

Bei modernen Thermoformmaschinen können mehr als 100 Formen 7 bzw. entsprechende Halteglieder 6 zugleich vorgesehen sein. Je nach Produkt liegen im Regelfall mehr als acht Formen 7 gleichzeitig vor.

Nach Übernahme der Produkte durch die Halteglieder 6 in einer Übernahmeposition fährt der Grundkörper 3 von dem Mehrfachwerkzeug 1 weg, schwenkt um 180° herum und fährt weiter in Richtung auf die Sammelstation 2 in eine Übergabeposition. Dort werden die Produkte in parallelen Stapelkanälen auf entsprechende Stapelkörbe 9 übergeben. Die vorstehend beschriebenen mechanischen Ausgestaltungen und die Vorgänge der Übernahme und Übergabe der Produkte sind aus dem Stand der Technik bekannt, zum Beispiel aus der Druckschrift EP 2 644 358 B1.

Gemäß der Erfindung ist in an jedem der Halteglieder 6 jeweils ein Sensorglied 10 angeordnet, mittels dessen das Vorhandensein und/oder Fehlen eines Produktes an dem Halteglied 6 detektiert wird. Die Sensorglieder 10 sind jeweils nach Bauart eines Lichttasters ausgebildet. Das Sensorglied 10 ist jeweils in der das Halteglied 6 tragenden Saugleitung 5 befestigt. Insbesondere kann das Sensorglied nach Art eines Adapters zwischen Halteglied und Saugleitung angeordnet sein, wobei bevorzugt auch bestehende Bauteile auf einfache Weise mit Sensorgliedern nachgerüstet werden können.

Eine optisch aktive Seite des Sensorglieds 10 ist auf die Durchbrechung 6a des Haltegliedes gerichtet. Befindet sich ein Produkt auf dem Halteglied, so die Durchbrechung überdeckt und von dem Sensorglied 10 abgestrahltes Licht wird in Reflexion detektiert, was die Detektion des Produkts bedeutet.

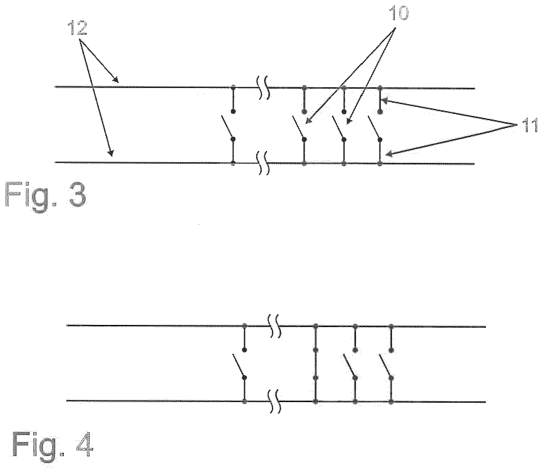

Die Sensorglieder 10 sind jeweils über eine Zuleitung 11 angeschlossen. Gemäß den Darstellungen nach Fig. 3 und Fig. 4 sind sämtliche der Sensorglieder 11 dabei nach Art einer Parallelschaltung miteinander verknüpft. Dies erlaubt es, mit nur wenigen äußeren Zuleitungen 12, im vorliegenden Beispiel zwei, auszukommen. Die äußeren Zuleitungen 12 werden innerhalb des Hohlraums 3a des Grundkörpers 3 mit den Zuleitungen 11 kontaktiert. Über eine vakuumdichte Durchführung (nicht dargestellt) werden die äußeren Zuleitungen 12 aus dem Vakuumbereich herausgeführt. Dort werden sie über eine Steckverbindung (nicht dargestellt) mit einer elektronischen Steuereinheit der Anlage verbunden.

Über ein Steuersignal an den äußeren Zuleitungen 12 können die Sensorglieder zudem in ihrer Funktion zwischen zwei Zuständen umgeschaltet werden. In einem ersten Schaltzustand fungiert das Sensorglied dabei nach Art eines Schalters, der bei Detektion eines Produktes (Licht wird reflektiert) öffnet. In einem zweiten Schaltzustand fungiert das Sensorglied dabei nach Art eines Schalters, der bei Detektion eines Produktes schließt.

Die Erfindung funktioniert nun wie folgt:
Vor einer Übernahme der Produkte aus dem Mehrfachwerkzeug werden die Sensorglieder in den ersten Schaltzustand verbracht. Nach einem Übernahmevorgang der Produkte aus dem Mehrfachwerkzeug wird eine erste Zustandsabfrage durchgeführt. Wenn die Übernahme erfolgreich war, dann sind nachfolgend alle Haltglieder belegt und somit alle Schalter bzw. Sensorglieder 10 geöffnet. Als resultierendes Signal sind die äußeren Zuleitungen 12 daher getrennt. In diesem Zustand darf die Vorrichtung die Produktübergabe fortsetzen bzw. das Mehrfachwerkzeug kann in eine Produktionsstellung zurückschwenken.

Falls aber nur eines (oder mehrere) der Produkte nicht übergeben wurde, ist eines der Halteglieder (oder mehrere) 6 nicht belegt und demnach einer (oder mehrere) der Schalter (Sensorglieder) 10 geschlossen, siehe Fig. 4. Dies bedeutet einen Kurzschluss zwischen den Zuleitungen 13 und die Thermoformmaschine wird nach Zustandsabfrage gestoppt. Im Regelfall hängt dann ein Produkt noch im Mehrfachwerkzeug, was nachfolgend zu einem Schaden oder weitergehenden Betriebsstörungen führen könnte.

Bei erfolgreichem Fortsetzen des Übergabevorgangs wird sodann der zweite Schaltzustand der Sensorglieder eingestellt. Zunächst wären dann sämtliche der Schalter geschlossen (nicht dargestellt). Die Anordnung aus Grundkörper 3 und Haltegliedern 6 wird um die Achse 4 geschwenkt und vor die Stapelstation 2 gefahren. Sodann werden die Produkte von den Haltegliedern 6 auf die Stapelkörbe 9 übergeben. Wenn sämtliche Produkte erfolgreich übergeben wurden, liegt wiederum der Zustand nach Fig. 3 vor. Andernfalls hängt zumindest ein Produkt noch auf seinem Halteglied (Zustand nach Fig. 4) und die Anlage wäre zu stoppen, um nachfolgende Betriebsstörungen oder Schäden zu vermeiden.

War die Übergabe erfolgreich, so wird wieder auf den ersten Schaltzustand der Sensorglieder umgestellt und der Grundkörper 3 wird zurück zum Mehrfachwerkzeug 1 gefahren, um einen erneuten Übergabevorgang einzuleiten.

Es versteht sich, dass auch andere logische Verknüpfungen der Sensorglieder 10 vorliegen können. Zum Beispiel könnten die Sensorglieder 10 sämtlich in Serie hintereinander geschaltet sein, so dass eine vollstände Übernahme / eine vollständige Übergabe dann vorliegt, wenn zwischen den äußeren Zuleitungen ein Kurzschlusse besteht.

### Bezugszeichenliste

- 1: Mehrfachwerkzeug
- 2: Sammelstation
- 3: Grundkörper
- 3a: Hohlraum, Vakuumkanal des Grundkörpers
- 3b: Durchbrechungen des Grundkörpers
- 3c: Tragplatte des Grundkörpers
- 3d: Korb des Grundkörpers
- 4: Schwenkachse des Grundkörpers
- 5: Saugleitung
- 6: Halteglied
- 6a: Durchbrechung des Halteglieds
- 7: Form für ein Produkt
- 8: Auswerfer
- 9: Stapelkorb
- 10: Sensorglied
- 11: Zuleitung zum Sensorglied
- 12: äußere Zuleitungen

## Patentansprüche

1. Vorrichtung zum Stapeln von aus einem Mehrfachwerkzeug (1) einer Thermoformmaschine ausgegebenen Produkten aus thermoplastischem Kunststoff, umfassend
zumindest einen insbesondere plattenförmigen Grundkörper (3), und
eine Mehrzahl von insbesondere konisch geformten Haltegliedern (6), wobei jedes der Halteglieder (6) mittels einer Saugleitung (5) an dem Grundkörper (3) angeordnet ist,
wobei jeweils ein Produkt mittels eines an der Saugleitung (5) anliegenden Unterdrucks an jeweils einem der Halteglieder (6) lösbar aufnehmbar ist,
und
wobei der Grundkörper (3) mit den Haltegliedern (6) und den aufgenommenen Produkten zwischen dem Mehrfachwerkzeug (1) der Thermoformmaschine und einer insbesondere stapelnden Sammelstation (2) verfahrbar ist,
**dadurch gekennzeichnet, dass** an jedem der Haltglieder (6) ein Sensorglied (10) angeordnet ist, mittels dessen ein Vorhandensein und/oder Fehlen eines Produktes an dem Halteglied (6) detektierbar ist und das Sensorglied (10) als optischer Sensor und/oder induktiver oder kapazitiver Sensor oder mechanischer Tastschalter vorgesehen ist.

2. Vorrichtung nach Anspruch 1, **dadurch gekennzeichnet, dass** die Sensorglieder (10) jeweils als optische Sensoren ausgebildet sind, wobei die Detektion des Produktes berührungsfrei erfolgt.

3. Vorrichtung nach Anspruch 1 oder 2, **dadurch gekennzeichnet, dass** eine Schaltfunktion der Sensorglieder (10) über ein Steuersignal ansteuerbar umschaltbar ist.

4. Vorrichtung nach einem der vorhergehenden Ansprüche, **dadurch gekennzeichnet, dass** die Sensorglieder (10) vakuumseitig, insbesondere jeweils innerhalb der Saugleitung (5), angeordnet sind.

5. Vorrichtung nach Anspruch 4, **dadurch gekennzeichnet, dass** eine Zuleitung (11) eines der Sensorglieder (10) in der Saugleitung (5) verlegt ist.

6. Vorrichtung nach einem der vorhergehenden Ansprüche, **dadurch gekennzeichnet, dass** die Sensorglieder (10) mittels Zuleitungen (11, 12) zu einer Serien- oder Parallelschaltung verbunden sind.

7. Vorrichtung nach einem der vorhergehenden Ansprüche, **dadurch gekennzeichnet, dass** an dem Grundkörper (3) eine Steckverbindung angeordnet ist, mittels der zumindest mehrere der Sensorglieder (10) mit einer Steuereinheit lösbar verbindbar sind.

8. Vorrichtung nach einem der vorhergehenden Ansprüche, **dadurch gekennzeichnet, dass** der Grundkörper (3) auf einem Weg zwischen der Thermoformmaschine (1) und der Sammelstation (2) um eine Schwenkachse (4) verschwenkt wird.

9. Verfahren zum Betrieb einer Vorrichtung nach einem der vorhergehenden Ansprüche, umfassend zumindest einen der Schritte:
a. Aufnahme der Produkte von dem Mehrfachwerkzeug (1) und Detektion mittels der Sensorglieder (10), ob sämtliche der Halteglieder (6) mit einem Produkt belegt sind;
b. Abgabe der Produkte an die Sammelstation (2) und Detektion mittels der Sensorglieder (10), ob sämtliche der Halteglieder (6) nicht mit einem Produkt belegt sind, wobei die Sensorglieder (10) als optische Sensoren und/oder induktive oder kapazitive Sensoren oder mechanische Tastschalter vorgesehen sind.

10. Verfahren nach Anspruch 9, **dadurch gekennzeichnet, dass** sowohl Schritt a. als auch Schritt b. durchgeführt werden, wobei insbesondere die Sensorglieder (10) zwischen den Schritten ein Steuersignal zum Umschalten einer Sensorfunktion erhalten.

## Claims

1. A device for stacking products of thermoplastic polymer, which are dispensed from a multi-cavity mold (1) of a thermoforming machine, comprising
at least one base body (3), which particularly is plate-shaped, and a plurality of holding elements (6), which particularly have a conical shape,
wherein each holding element (6) is arranged on the base body (3) by means of a suction line (5),
wherein one respective product can be detachably received on each of the holding elements (6) by means of a vacuum applied to the suction line (5), and
wherein the base body (3) can be displaced between the multi-cavity mold (1) of the thermoforming machine and, in particular, a stacking collection station (2) together with the holding elements (6) and the received products,
**characterized in that**
a sensor element (10) is arranged on each of the holding elements (6), wherein said sensor element makes it possible to detect the presence and/or absence of a product on the holding element (6) and the sensor element (10) is realized in the form of an optical sensor and/or an inductive or capacitive sensor or a mechanical contact switch.

2. The device according to claim 1, **characterized in that** the sensor elements (10) respectively are realized in the form of optical sensors, wherein the detection of the product takes place in a contactless manner.

3. The device according to claim 1 or 2, **characterized in that** a switching function of the sensor elements (10) can be changed over in a controllable manner by means of a control signal.

4. The device according to one of the preceding claims, **characterized in that** the sensor elements (10) are arranged on the vacuum side, particularly within the respective suction line (5).

5. The device according to claim 4, **characterized in that** a supply line (11) of one of the sensor elements (10) is installed in the suction line (5).

6. The device according to one of the preceding claims, **characterized in that** the sensor elements (10) are connected into a serial or parallel circuit by means of supply lines (11, 12).

7. The device according to one of the preceding claims, **characterized in that** a plug connection is arranged on the base body (3) and makes it possible to detachably connect at least several of the sensor elements (10) to a control unit.

8. The device according to one of the preceding claims, **characterized in that** the base body (3) is pivoted about a pivoting axis (4) during its displacement between the thermoforming machine (1) and the collection station (2).

9. A method for operating a device according to one of the preceding claims, comprising at least one of the following steps:
a. receiving the products from the multi-cavity mold (1) and detecting if all holding elements (6) are occupied by a product by means of the sensor elements (10);
b. delivering the products to the collection station (2) and detecting if all holding elements (6) are not occupied by a product by means of the sensor elements (10), wherein the sensor elements (10) are realized in the form of optical sensors and/or inductive or capacitive sensors or mechanical contact switches.

10. The method according to claim 9, **characterized in that** step a. and step b. are carried out, wherein particularly the sensor elements (10) receive a control signal for changing over a sensor function between the steps.

## Revendications

1. Dispositif destiné à empiler des produits en matière thermoplastique, distribués par un multi-outil (1) d'une machine de thermoformage, comprenant
au moins un corps de base (3), notamment en forme de plaque et une pluralité d'organes de retenue (6), notamment de forme conique,
chacun des organes de retenue (6) étant placé au moyen d'un conduit d'aspiration (5) sur le corps de base (3),
chaque fois un produit étant susceptible d'être réceptionné de manière désolidarisable sur respectivement l'un des organes de retenue (6) au moyen d'une dépression appliquée sur le conduit d'aspiration (5), et
le corps de base (3) étant susceptible d'être déplacé avec les organes de retenue (6) et les produits réceptionnés entre le multi-outil (1) de la machine de thermoformage et un poste collecteur (2) assurant notamment l'empilage,
**caractérisé en ce que**
sur chacun des organes de retenue (6) est placé un élément capteur (10) au moyen duquel une présence et/ou une absence d'un produit sur l'organe de retenue (6) est susceptible d'être détectée et **en ce que** l'élément capteur (10) est prévu sous la forme d'un capteur optique et/ou d'un capteur inductif et/ou capacitif ou en tant que commutateur à touche mécanique.

2. Dispositif selon la revendication 1, **caractérisé en ce que** les éléments capteurs (10) sont respectivement conçus sous la forme de capteurs optiques, la détection du produit s'effectuant sans contact.

3. Dispositif selon la revendication 1 ou 2, **caractérisé en ce qu'**une fonction de commutation des éléments capteurs (10) est commutable en étant amorçable par un signal de commande.

4. Dispositif selon l'une quelconque des revendications précédentes, caractérisé en ce les éléments capteurs (10) sont placés du côté dépression, notamment respectivement à l'intérieur du conduit d'aspiration (5) .

5. Dispositif selon la revendication 4, **caractérisé en ce qu'**un conduit d'alimentation (11) de l'un des éléments capteurs (10) est posé dans le conduit d'aspiration (5) .

6. Dispositif selon l'une quelconque des revendications précédentes, **caractérisé en ce que** les éléments capteurs (10) sont connectés au moyen de conduits d'alimentation (11, 12) en une connexion en série ou une connexion parallèle.

7. Dispositif selon l'une quelconque des revendications précédentes, **caractérisé en ce que** sur le corps de base (3) est placée une connexion enfichable, au moyen de laquelle au moins plusieurs des éléments capteurs (10) sont susceptibles d'être connectés de manière désolidarisable avec une unité de commande.

8. Dispositif selon l'une quelconque des revendications précédentes, **caractérisé en ce que** le corps de base (3) pivote autour d'un axe de pivotement (4), sur un trajet entre la machine de thermoformage (1) et le poste collecteur (2).

9. Procédé opérationnel d'un dispositif selon l'une quelconque des revendications précédentes, comprenant au moins l'une des étapes consistant à :
a. réceptionner les produits à partir du multi-outil (1) et détecter, au moyen des éléments capteurs (10), si tous les organes de retenue (6) sont pourvus d'un produit ;
b. distribuer les produits au poste collecteur (2) e détecter au moyen des éléments capteurs (10), si tous les organes de retenue (6) ne sont pas pourvus d'un produit, les éléments capteurs (10) étant prévus sous la forme de capteurs optiques et/ou de capteurs inductifs ou capacitifs ou en tant que commutateurs à touche mécanique.

10. Procédé selon la revendication 9, **caractérisé en ce qu'**aussi bien l'étape a. qu'également l'étape b. sont réalisées, notamment les organes capteurs (10) recevant entre les étapes un signal de commande pour la commutation d'une fonction de capteur.
